# EUROPEAN PATENT APPLICATION

(11) **EP 4 489 091 A1**
(43) Date of publication of application: **08.01.2025**
(21) Application number: 22928838.6
(22) Date of filing: 30.09.2022
(51) Int. Cl.: H01M 4/13, H01M 4/66, H01M 10/052, H01M 10/0562, H01M 4/62

(54) **ALL-SOLID-STATE BATTERY**

(30) Priority: 28.02.2022 JP 2022029456
(71) Applicant: TDK Corporation, Tokyo 103-6128 (JP)
(72) Inventor: SATO, Hiroshi, Tokyo 103-6128 (JP); YAMAGUCHI, Yuusuke, Tokyo 103-6128 (JP); SUZUKI, Shota, Tokyo 103-6128 (JP); OYAKE, Hisaji, Tokyo 103-6128 (JP); MUROI, Masayuki, Tokyo 103-6128 (JP)
(74) Representative: Epping - Hermann - Fischer
(86) International application number: PCT/JP2022/036665
(87) International publication number: WO 2023/162317

(57) **Abstract**

An all-solid-state battery including a sintered body including a positive electrode, a negative electrode and a solid electrolyte layer between the positive electrode and the negative electrode, in which the positive electrode contains a Ag-containing compound, a Li-containing transition metal oxide and an oxide having a composition different from a composition of the Li-containing transition metal oxide, the oxide contains Ag, and at least a part of the Ag-containing compound and the Li-containing transition metal oxide is present in the positive electrode with the oxide present therebetween.

## Description

### Technical Field

The present invention relates to an all-solid-state battery.

The present application claims priority on Japanese Patent Application No. 2022-029456 filed on February 28, 2022, the content of which is incorporated herein by reference.

### Background Art

In recent years, the development of electronics technology has been remarkable, and attempts have been made for reduction in size, weight and thickness and multifunctionalization of mobile electronic devices. Accordingly, there has been a strong desire for reduction in size, weight and thickness and improvement in reliability for batteries, which serve as power supplies of electronic devices, and all-solid-state batteries where a solid electrolyte is used as an electrolyte have been attracting attention.

There are thin film-type all-solid-state batteries and bulk-type all-solid-state batteries. Thin film-type all-solid-state batteries are produced using a thin film technique such as a physical vapor deposition (PVD) method or a sol-gel method. Bulk-type all-solid-state batteries are produced using a powder forming method, a sintering method or the like. For individual all-solid-state batteries, applicable substances and performances vary due to differences in the manufacturing method. For example, for the bulk-type all-solid-state batteries in which a sintered body is used, it is necessary to use a material capable of withstanding sintering, but it is possible to thicken each layer; and as a result, the capacity becomes high.

For example, Patent Document 1 discloses a sintering-type all-solid-state battery in which an oxide-based solid electrolyte is used as a solid electrolyte.

### Citation List

### Patent Document

Patent Document 1: PCT International Publication No. WO 2007/135790

### Summary of Invention

### Technical Problem

It is important for batteries to have performance that does not significantly deteriorate even after being repeatedly charged and discharged a plurality of times, and there is a demand for an all-solid-state battery having excellent cycle characteristics.

The present invention has been made in consideration of the above-described problem, and an object of the present invention is to improve the cycle characteristics of an all-solid-state battery.

### Solution to Problem

In order to achieve the aforementioned object, the following solutions are provided.

(1) An all-solid-state battery according to a first aspect includes a sintered body including a positive electrode, a negative electrode and a solid electrolyte layer between the positive electrode and the negative electrode, the positive electrode contains a Ag-containing compound, a Li-containing transition metal oxide and an oxide having a composition different from a composition of the Li-containing transition metal oxide, the oxide contains Ag, and at least a part of the Ag-containing compound and the Li-containing transition metal oxide is present in the positive electrode with the oxide present therebetween.
(2) In the all-solid-state battery according to the aspect, the oxide may contain a transition metal element that configures the Li-containing transition metal oxide.
(3) In the all-solid-state battery according to the aspect, a minimum thickness of the oxide that links at least a part of the Ag-containing compound and the Li-containing transition metal oxide may be 0.01 µm or more and 2.0 µm or less.
(4) In the all-solid-state battery according to the aspect, a contact rate between the Li-containing transition metal oxide and the Ag-containing compound in a cross section of the positive electrode may be 0.1% or more and 10% or less.
(5) In the all-solid-state battery according to the aspect, the Ag-containing compound may be any one selected from Ag or Ag/Pd.
(6) In the all-solid-state battery according to the aspect, the positive electrode may include a first layer and a second layer on at least one main surface of the first layer, and the first layer may contain the Ag-containing compound, the Li-containing transition metal oxide and the oxide.
(7) In the all-solid-state battery according to the aspect, the second layer may contain the Li-containing transition metal oxide.
(8) In the all-solid-state battery according to the aspect, the first layer and the second layer may contain a Li-containing transition metal oxide having the same composition.
(9) In the all-solid-state battery according to the aspect, the positive electrode may contain lithium cobaltate.

### Advantageous Effects of Invention

The all-solid-state battery according to the aspect is capable of improving cycle characteristics.

### Brief Description of Drawings

[FIG. 1] a cross-sectional view of an all-solid-state battery according to a first embodiment.
[FIG. 2] a cross-sectional view showing a part of a positive electrode according to the first embodiment in an enlarged manner.
[FIG. 3] a cross-sectional view showing a part of the positive electrode of another example according to the first embodiment in an enlarged manner.
[FIG. 4] a cross-sectional view showing a part of a negative electrode according to the first embodiment in an enlarged manner.
[FIG. 5] a cross-sectional view showing a part of the negative electrode of another example according to the first embodiment in an enlarged manner.

### Description of Embodiments

Hereinafter, the present embodiment will be described in detail with appropriate reference to drawings. In the drawings to be used in the following description, there are cases where a characteristic part is shown in an enlarged manner for convenience in order to facilitate the understanding of a characteristic of the present invention, and there are cases where the dimensional ratio or the like of each constituent element is different from the actual one. Materials, dimensions and the like to be exemplified in the following description are simply examples, and the present invention is not limited thereto and can be modified as appropriate within the scope of the features of the present invention and carried out.

Directions will be defined. The lamination direction of a laminated body 4 is defined as a z direction, one direction in a plane orthogonal to the z direction is defined as an x direction, and a direction orthogonal to the x direction and the z direction is defined as a y direction. Hereinafter, there will be cases where one direction in the z direction is expressed as "up" and a direction opposite to the above-described direction is expressed as "down." Up and down do not always match the direction in which the force of gravity is applied.

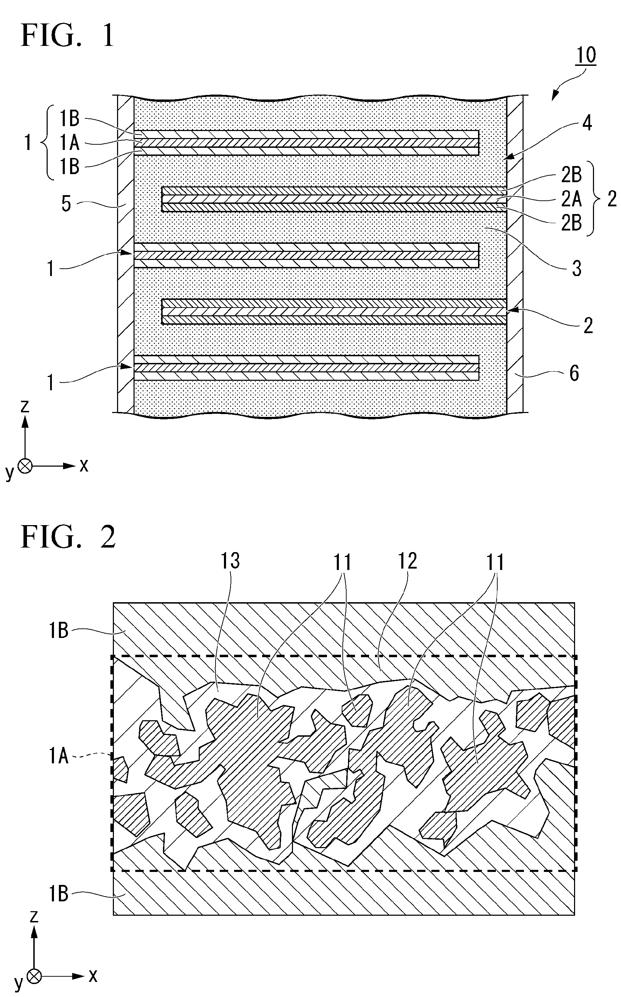

FIG. 1 is a schematic cross-sectional view of an all-solid-state battery 10 according to the present embodiment. The all-solid-state battery 10 includes the laminated body 4 and terminal electrodes 5 and 6. Each of the terminal electrodes 5 and 6 is in contact with each of the facing surfaces of the laminated body 4. The terminal electrodes 5 and 6 extend in the z direction, which intersects with (is orthogonal to) the laminate surface of the laminated body 4.

The laminated body 4 includes positive electrodes 1, negative electrodes 2 and a solid electrolyte layer 3. The laminated body 4 is a sintered body obtained by laminating and sintering the positive electrodes 1, the negative electrodes 2 and the solid electrolyte layer 3. The number of layers of the positive electrodes 1 and the negative electrodes 2 does not matter. The solid electrolyte layer 3 is present at least between the positive electrode 1 and the negative electrode 2. Between the positive electrode 1 and the terminal electrode 5 and between the negative electrode 2 and the terminal electrode 6, there are, for example, the same solid electrolyte as the solid electrolyte layer 3. The positive electrodes 1 are in contact with the terminal electrode 5 at one end. The negative electrodes 2 are in contact with the terminal electrode 6 at one end.

The all-solid-state battery 10 is charged and discharged by the transfer of ions between the positive electrode 1 and the negative electrode 2 through the solid electrolyte layer 3. In FIG. 1, a stacked battery is shown, but the all-solid-state battery may be a wound battery. The all-solid-state battery 10 can be used in, for example, laminated batteries, square batteries, cylindrical batteries, coin-like batteries, button-like batteries and the like. In addition, the all-solid-state battery 10 may be an immersion type in which the solid electrolyte layer 3 is dissolved or dispersed in a solvent.

### "Positive electrode"

FIG. 2 is an enlarged view of a part of the positive electrode 1 according to a first embodiment. In terms of the structural aspect, the positive electrode 1 includes, for example, a positive electrode current collector layer 1A (in the present specification, referred to as "first layer" in some cases) and positive electrode active material layers 1B (in the present specification, referred to as "second layer" in some cases). In terms of the compositional aspect, the positive electrode 1 contains, for example, a Ag-containing compound, a Li-containing transition metal oxide and an oxide having a composition different from a composition of the Li-containing transition metal oxide (hereinafter, referred to as "oxide").

The oxide contains Ag.

At least a part of the Ag-containing compound and the Li-containing transition metal oxide is present in the positive electrode (for example, in the interior of the positive electrode current collector layer or in the interior of the positive electrode current collector layer and the interior of the positive electrode active material layer) with the oxide present therebetween.

### [Positive electrode current collector layer]

The positive electrode current collector layer (first layer) 1A includes, for example, a positive electrode current collector 11 (in the present specification, referred to as "Ag-containing compound" in some cases), a positive electrode active material 12 (in the present specification, referred to as "Li-containing transition metal oxide" in some cases) and an oxide 13 (oxide) having a composition different from that of the Li-containing transition metal oxide. In this case, a space between an xy plane that passes through the uppermost part of the oxide 13 having a composition different from that of the Li-containing transition metal oxide and an xy plane that passes through the lowermost part thereof is regarded as the positive electrode current collector layer 1A.

The positive electrode current collector 11 contains Ag. The positive electrode current collector 11 contains, for example, a Ag-containing metal or alloy. The Ag-containing metal or alloy does not melt even when the laminated body 4 is heated in the atmosphere and does not easily oxidize. The positive electrode current collector 11 is, for example, Ag or a AgPd alloy.

The positive electrode current collector 11 is composed of, for example, a plurality of conductive particles. The plurality of conductive particles are connected to each other and are electrically connected to each other in an xy plane. The positive electrode current collector 11 is not limited to this example and may have a form of a foil, a punched film or an expanded film that spreads in an xy plane.

The positive electrode active material 12 is present in the positive electrode current collector layer 1A together with the positive electrode current collector 11 in a mixed manner. When the positive electrode active material 12 is contained in the positive electrode current collector layer 1A, electrons are smoothly transferred between the positive electrode active material 12 and the positive electrode current collector 11.

The positive electrode active material 12 is not particularly limited as long as the positive electrode active material is capable of reversibly advancing the release and occlusion of lithium ions and the deintercalation and intercalation of lithium ions. For example, positive electrode active materials that are in use in well-known lithium ion secondary batteries can be used.

The positive electrode active material 12 is, for example, a composite transition metal oxide (including a Li-containing transition metal oxide). The positive electrode active material 12 is preferably a transition metal oxide containing any one or more selected from the group consisting of Co, Ni, Mn, Fe and V. The positive electrode active material 12 is preferably a lithium manganese composite oxide, a lithium nickel composite oxide, a lithium cobalt composite oxide, a lithium vanadium composite oxide, a lithium titanium composite oxide, manganese dioxide, titanium oxide, niobium oxide, vanadium oxide, tungsten oxide or the like. For example, the positive electrode active material 12 is LiCoO₂ or LiMnO₂. The compositions of these compounds may deviate from stoichiometric compositions.

For example, the positive electrode active material 12 may be lithium cobaltate represented by LiₓCoO₂, and x may vary within a range of 0.4 to 1.2 in association with the charging and discharging of the all-solid-state battery.

In addition, positive electrode active materials containing no lithium can also be used as the positive electrode active material 12. These positive electrode active materials can be used by disposing a metallic lithium or lithium ion-doped negative electrode active material in the negative electrode in advance and initiating the discharging of the battery. For example, lithium-free metal oxides (MnO₂, V₂O₅ and the like) and the like are examples of these positive electrode active materials.

The oxide 13 (oxide) having a composition different from that of the Li-containing transition metal oxide is present between the positive electrode current collector 11 and the positive electrode active material 12. The oxide 13 having a composition different from that of the Li-containing transition metal oxide is a Ag-containing oxide. The oxide 13 having a composition different from that of the Li-containing transition metal oxide prevents the oxidation of Ag that is contained in the positive electrode current collector 11 and improves the cycle characteristics of the all-solid-state battery 10.

The oxide 13 having a composition different from that of the Li-containing transition metal oxide preferably contains a constituent element that configures the positive electrode active material 12. For example, in a case where the positive electrode active material 12 is LiCoO₂, the oxide 13 having a composition different from that of the Li-containing transition metal oxide is preferably AgCoO₂. For example, in a case where the positive electrode active material 12 is LiMn₂O₄, the oxide 13 having a composition different from that of the Li-containing transition metal oxide is preferably AgMn₂O₄.

The thickness of the oxide 13 having a composition different from that of the Li-containing transition metal oxide is, for example, 0.01 µm or more. The thickness of the oxide 13 having a composition different from that of the Li-containing transition metal oxide is preferably 0.1 µm or more. The thickness of the oxide 13 having a composition different from that of the Li-containing transition metal oxide can be obtained from a scanning electron microscopic image. First, a first imaginary line that passes through the uppermost part of the positive electrode current collector 11 is drawn on the image. Next, a second imaginary line that passes through the uppermost part of the oxide 13 having a composition different from that of the Li-containing transition metal oxide is drawn. The width between the first imaginary line and the second imaginary line is regarded as the thickness of the oxide 13 having a composition different from that of the Li-containing transition metal oxide in the image. The above-described treatment is performed on 10 images, and the average value thereof is defined as "the thickness of the oxide 13 having a composition different from that of the Li-containing transition metal oxide (the thickness of the oxide that links at least a part of the Ag-containing compound and the Li-containing transition metal oxide)." The first imaginary line and the second imaginary line are each defined as the line that passes through the uppermost part of the positive electrode current collector 11 or the line that passes through the uppermost part of the oxide 13 having a composition different from that of the Li-containing transition metal oxide, but may also be defined as a line that passes through the lowermost part of each thereof.

### [Positive electrode active material layer]

The positive electrode active material layer 1B (second layer) is formed on one surface or both surfaces of the positive electrode current collector layer 1A. The positive electrode active material layer 1B contains a positive electrode active material. The positive electrode active material layer 1B may contain a conductive assistant, a binder or a solid electrolyte as described later. In a case where the positive electrode active material layer 1B contains the solid electrolyte, a space between an xy plane that passes through the outermost part of the positive electrode active material and the boundary with the positive electrode current collector layer 1A is regarded as the positive electrode active material layer 1B.

The positive electrode active material that is contained in the positive electrode active material layers 1B is the same as the positive electrode active material 12 that is contained in the positive electrode current collector layer 1A.

The conductive assistant is not particularly limited as long as the conductive assistant makes the electron conductivity in the positive electrode active material layers 1B favorable, and a well-known conductive assistant can be used. Examples of the conductive assistant include carbon-based materials such as graphite, carbon black, graphene and carbon nanotubes, metals such as gold, platinum, silver, palladium, aluminum, copper, nickel, stainless steel and iron, conductive oxides such as ITO and mixtures thereof. The conductive assistant may have a form of a powder or a fiber.

The binder joins the positive electrode current collector layer 1A and the positive electrode active material layer 1B, the positive electrode active material layer 1B and the solid electrolyte layer 3, and a variety of materials that configure the positive electrode active material layer 1B together.

The binder can be used to an extent that the function of the positive electrode active material layer 1B is not lost. The binder may not be contained if not necessary. The amount of the binder in the positive electrode active material layer 1B is, for example, 0.5 to 30 vol% of the positive electrode active material layer. When the amount of the binder is sufficiently small, the resistance of the positive electrode active material layer 1B becomes sufficiently low. The vol% approximately matches, for example, the area% in a cross section that is measured with a scanning electron microscope. Therefore, the area ratio in the cross section that is measured with a scanning electron microscope can be regarded as the volume ratio as it is.

The binder needs to be capable of the above-described joining, and examples thereof include fluororesins such as polyvinylidene fluoride (PVDF) and polytetrafluoroethylene (PTFE). Furthermore, in addition to the above-listed binders, for example, cellulose, styrene-butadiene rubber, ethylene-propylene rubber, polyimide resins, polyamide-imide resins and the like may also be used as the binder. In addition, conductive polymers having electron conductivity or ion-conductive polymers having ion conductivity may also be used as the binder. Examples of the conductive polymers having electron conductivity include polyacetylene and the like. In this case, the binder also exhibits the function of the conductive assistant, and there is thus no need to add the conductive assistant. As the ion-conductive polymers having ion conductivity, for example, polymers that conduct lithium ions or the like can be used, and examples thereof include polymers obtained by compositing a monomer of a polymer compound (a polyether-based polymer compound such as polyethylene oxide, polypropylene oxide or the like, polyphosphazene or the like) and a lithium salt such as LiClO₄, LiBF₄ or LiPF₆ or an alkali metal salt mainly containing lithium. A polymerization initiator that is used for the compositing is, for example, a photopolymerization initiator or thermopolymerization initiator suitable for the above-listed monomers and the like. Examples of characteristics required for the binder include oxidation/reduction resistance and favorable adhesiveness.

Hitherto, specific examples of one embodiment of the positive electrode have been described, but the positive electrode is not limited to these examples. For example, the positive electrode current collector layer (first layer) may consist of the positive electrode current collector 11 (Ag-containing compound). In this case, the oxide 13 (oxide) having a composition different from that of the Li-containing transition metal oxide is present between the positive electrode current collector layer (first layer) and the positive electrode active material layer (second layer). In addition, the positive electrode may be a single layer in which the positive electrode current collector 11 (Ag-containing compound), the positive electrode active material 12 (Li-containing transition metal oxide) and the oxide 13 (oxide) having a composition different from that of the Li-containing transition metal oxide are present in a mixed manner.

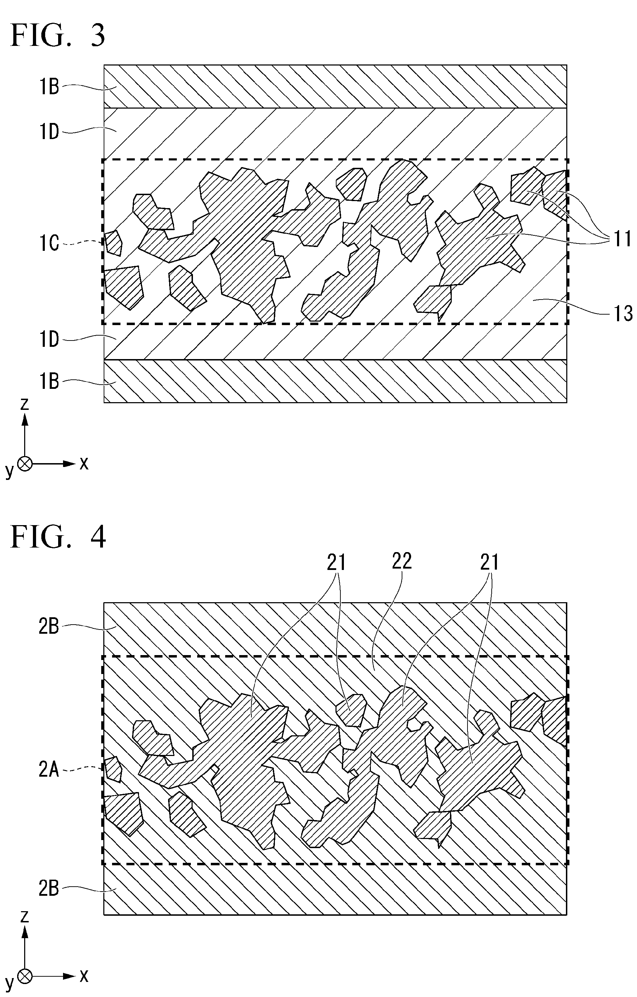

In addition, FIG. 3 is a cross-sectional view of the positive electrode of another example according to the first embodiment along the lamination direction. A positive electrode shown in FIG. 3 includes a positive electrode current collector layer 1C, interlayers 1D and the positive electrode active material layers 1B. The positive electrode current collector layer 1C contains the positive electrode current collector 11 and the oxide 13 (oxide) having a composition different from that of the Li-containing transition metal oxide. The interlayer 1D is composed of the oxide 13 (oxide) having a composition different from that of the Li-containing transition metal oxide. The example shown in FIG. 3 corresponds to a case where the thickness of the oxide 13 (oxide) having a composition different from that of the Li-containing transition metal oxide is thicker than that in the example shown in FIG. 2.

### "Solid electrolyte layer"

The solid electrolyte layer 3 contains a solid electrolyte. The solid electrolyte is a substance capable of migrating ions due to an electric field applied from the outside. For example, the solid electrolyte layer 3 conducts lithium ions and impairs the migration of electrons. The solid electrolyte layer 3 is, for example, a sintered body that is obtained by sintering.

The solid electrolyte layer 3 contains, for example, a solid electrolyte having a γ-Li₃PO₄-type crystal structure. The solid electrolyte having a γ-Li₃PO₄-type crystal structure has excellent ion conductivity. The solid electrolyte is, for example, Li₃₊ₓSiₓP₁₋ₓO₄, Li₃₊ₓSiₓV₁₋ₓO₄, Li₃₊ₓGeₓP₁₋ₓO₄, Li₃₊ₓGeₓV₁₋ₓO₄ or the like and preferably Li₃₊ₓSiₓP₁₋ₓO₄. x satisfies 0.4 ≤ x ≤ 0.8. In addition, the solid electrolyte may be a ternary lithium oxide containing Si, V, Ge and the like.

### "Negative electrode"

FIG. 4 is an enlarged view of a part of the negative electrode 2 according to the first embodiment. The negative electrode 2 includes, for example, a negative electrode current collector layer 2A and negative electrode active material layers 2B containing a negative electrode active material.

The negative electrode current collector layer 2A includes, for example, a negative electrode current collector 21 and a negative electrode active material 22. In this case, a space between an xy plane that passes through the uppermost part of the negative electrode current collector 21 and an xy plane that passes through the lowermost part thereof is regarded as the negative electrode current collector layer 2A.

The negative electrode current collector 21 contains a metal or alloy containing any one selected from Ag, Pd, Au and Pt. The negative electrode current collector 21 is preferably, for example, a AgPd alloy, Au or Pt.

The negative electrode current collector 21 is composed of, for example, a plurality of conductive particles. The conductive particles are connected to each other and are electrically connected to each other in an xy plane. The negative electrode current collector 21 is not limited to this example and may have, for example, a form of a foil, a punched film or an expanded film that spreads in an xy plane.

The negative electrode active material 22 is present, for example, in the negative electrode current collector layer 2A together with the negative electrode current collector 21 in a mixed manner. The negative electrode active material 22 is in contact with the negative electrode current collector 21. When the negative electrode active material 22 is contained in the negative electrode current collector layer 2A, electrons are smoothly transferred between the negative electrode active material 22 and the negative electrode current collector 21. The negative electrode active material 22 is the same as a negative electrode active material that is contained in the negative electrode active material layer 2B, which will be described below.

The negative electrode active material layer 2B is formed on one surface or both surfaces of the negative electrode current collector layer 2A. The negative electrode active material layer 2B contains a negative electrode active material. The negative electrode active material layer 2B may contain a conductive assistant, a binder or the above-described solid electrolyte. In a case where the negative electrode active material layer 2B contains the solid electrolyte, a space between an xy plane that passes through the outermost part of the negative electrode active material and the boundary with the negative electrode current collector layer 2A is regarded as the negative electrode active material layer 2B.

The negative electrode active material is a compound capable of occluding and releasing ions. The negative electrode active material is a compound exhibiting a lower potential than the positive electrode active material. As the negative electrode active material, the same material as the positive electrode active material can be used. The negative electrode active material and the positive electrode active material that are used in the all-solid-state battery 10 are determined in consideration of the potential of the negative electrode active material and the potential of the positive electrode active material. The negative electrode active material is, for example, Li₄Ti₅O₁₂, LiTiO₂, Li₂TiO₃ or Li₂TiSiO₅.

The conductive assistant makes the electron conductivity of the negative electrode active material layer 2B favorable. As the conductive assistant, the same material as in the positive electrode active material layer 1B can be used.

The binder joins the negative electrode current collector layer 2A and the negative electrode active material layer 2B, the negative electrode active material layer 2B and the solid electrolyte layer 3, and a variety of materials that configure the negative electrode active material layer 2B together. As the binder, the same material as in the positive electrode active material layer 1B can be used. The amount ratio of the binder can also be set to the same amount ratio as in the positive electrode active material layer 1B. The binder may not be contained if not necessary.

In FIG. 4, an example where the negative electrode 2 is composed of the negative electrode current collector layer 2A and the negative electrode active material layers 2B has been shown, but the configuration is not limited to this case. For example, the negative electrode current collector layer 2A may consist of the negative electrode current collector 21.

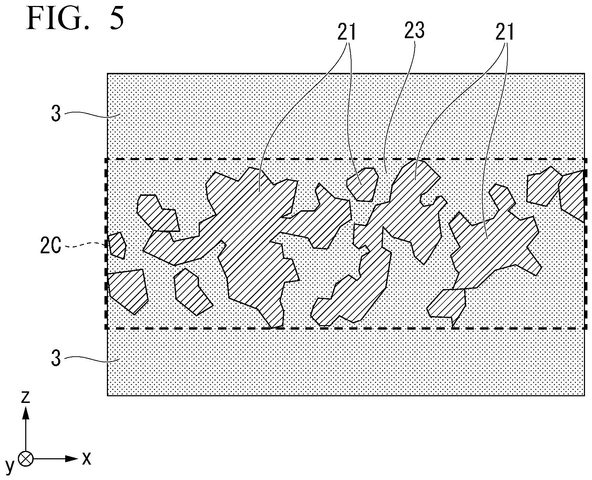

In addition, FIG. 5 is an enlarged view of a part of the negative electrode of another example according to the first embodiment. A negative electrode 2C shown in FIG. 5 contains the negative electrode current collector 21 and the solid electrolyte 23. The negative electrode current collector 21 is, for example, a Ag-containing metal or alloy. Ag also functions as an active material. When Ag functions as a negative electrode active material, the potential window of the all-solid-state battery becomes wide, and a charge and discharge reaction occurs between a high potential (approximately 3.8 V) and a low potential (approximately 0 V). As a result, the all-solid-state battery has a high capacity, and the energy density of the all-solid-state battery improves.

### "Method for manufacturing all-solid-state battery"

Next, a method for manufacturing the all-solid-state battery 10 will be described. First, the laminated body 4 is produced. The laminated body 4 is produced by, for example, a simultaneous sintering method or a sequential sintering method.

The simultaneous sintering method is a method in which a material that configures each layer is laminated and the laminated body 4 is then produced by batch sintering. The sequential sintering method is a method in which sintering is performed whenever each layer is formed. The simultaneous sintering method is capable of producing the laminated body 4 with a smaller number of working steps than the sequential sintering method. In addition, the laminated body 4 produced by the simultaneous sintering method becomes denser than the laminated body 4 produced using the sequential sintering method. Hereinafter, a case where the simultaneous sintering method is used will be described as an example.

First, the materials of the positive electrode current collector layer 1A, the positive electrode active material layer 1B, the solid electrolyte layer 3, the negative electrode active material layer 2B and the negative electrode current collector layer 2A, which configure the laminated body 4, are each made into a paste. In the case of the example shown in FIG. 2, a paste is made after the positive electrode current collector 11 is coated with the oxide 13 having a composition different from that of the Li-containing transition metal oxide. In the case of the example shown in FIG. 3, the material that configures the interlayer 1D is also made into a paste.

A method for making each material into a paste is not particularly limited, and for example, a method in which the powder of each material is mixed into a vehicle to obtain a paste can be used. The vehicle is a collective term for liquid-phase media. The vehicle includes a solvent or a binder.

Next, a green sheet is produced. The green sheet is obtained by applying the paste produced from each material onto a base material such as a polyethylene terephthalate (PET) film, drying the paste as necessary and then peeling off the base material. A method for applying the paste is not particularly limited, and for example, a well-known method such as screen printing, application, transfer or doctor blade can be used.

Next, the green sheet produced from each material is laminated according to a desired order and the desired number of laminated layers to produce a laminated sheet. Upon laminating the green sheets, alignment, cutting or the like is performed as necessary. For example, in the case of producing a parallel or serial-parallel battery, alignment is performed so that the end face of the positive electrode current collector layer 1A and the end face of the negative electrode current collector layer 2A do not match, and each green sheet is laminated.

The laminated sheet may also be produced using a method in which a positive electrode unit and a negative electrode unit are produced and these units are laminated together. The positive electrode unit is a laminated sheet in which the solid electrolyte layer 3, the positive electrode active material layer 1B, the positive electrode current collector layer 1A and the positive electrode active material layer 1B are laminated in this order. In the case of the example shown in FIG. 3, the interlayer 1D is laminated between the positive electrode current collector layer 1A and the positive electrode active material layer 1B. The negative electrode unit is a laminated sheet in which the solid electrolyte layer 3, the negative electrode active material layer 2B, the negative electrode current collector layer 2A and the negative electrode active material layer 2B are laminated in this order. The electrode units are laminated so that the solid electrolyte layer 3 of the positive electrode unit and the negative electrode active material layer 2B of the negative electrode unit face each other or the positive electrode active material layer 1B of the positive electrode unit and the solid electrolyte layer 3 of the negative electrode unit face each other.

Next, the produced laminated sheet is pressurized by batch, and the adhesion of each layer is enhanced. The pressurization can be performed by, for example, mold press, warm isostatic press (WIP), cold isostatic press (CIP), isostatic press or the like. The pressurization is preferably performed together with heating. The heating temperature during crimping is set to be in a range of, for example, 40°C to 95°C. Next, the pressurized laminated body is cut using a dicing device to make into chips. In addition, the chips are subjected to a binder removal treatment and sintering; and thereby, the laminated body 4 made of a sintered body is obtained.

The binder removal treatment can be performed as a step separate from a sintering step. A binder removal step heats and decomposes the binder component that is contained in the chips before the sintering step and makes it possible to suppress the binder component being rapidly decomposed in the sintering step. The binder removal step is performed by, for example, heating the chips in the atmosphere at a temperature of 300°C to 800°C for 0.1 to 10 hours. The atmosphere of the binder removal step is an oxygen partial pressure environment in which the materials that configure the positive electrode, the negative electrode and the solid electrolyte are not oxidized and reduced or less likely to be oxidized and reduced, and it is possible to arbitrarily select the type of the atmosphere gas so that the materials that configure the positive electrode, the negative electrode and the solid electrolyte and the gas do not react with each other. For example, the binder removal step may be performed in a nitrogen atmosphere, an argon atmosphere, a nitrogen/hydrogen-mixed atmosphere, a water vapor atmosphere or a mixed atmosphere thereof.

For example, the chips mounted on a ceramic stand is subjected to the sintering step. Sintering is performed by, for example, heating the chips to a temperature of 600°C to 1000°C in the atmosphere. The atmosphere of the sintering step is an oxygen partial pressure environment in which the materials that configure the positive electrode, the negative electrode and the solid electrolyte are not oxidized and reduced or less likely to be oxidized and reduced, and it is possible to arbitrarily select the type of the atmosphere gas so that the materials that configure the positive electrode, the negative electrode and the solid electrolyte and the gas do not react with each other. For example, the sintering step may be performed in a nitrogen atmosphere, an argon atmosphere, a nitrogen/hydrogen-mixed atmosphere, a water vapor atmosphere or a mixed atmosphere thereof.

In addition, the sintered laminated body 4 (sintered body) may be put into a cylindrical container together with an abrasive such as alumina, and barrel polishing may be performed. This makes it possible to chamfer the corners of the laminated body. The polishing may be performed using sandblasting. The sandblasting is capable of shaving only a specific part, which is preferable.

The terminal electrodes 5 and 6 are formed on the side surfaces of the produced laminated body 4, which are opposite to each other. The terminal electrodes 5 and 6 can be each formed using a method, for example, a sputtering method, a dipping method, a screen printing method or a spray coating method. The all-solid-state battery 10 can be produced by performing the above-described steps. In a case where the terminal electrodes 5 and 6 are formed only in predetermined parts, the above-described treatment is performed in a state where the predetermined parts are masked with tape or the like.

The all-solid-state battery according to the present embodiment has excellent cycle characteristics. The reason therefor is not clear, but is considered that the oxide 13 having a composition different from that of the Li-containing transition metal oxide functions as a coated film that prevents the oxidation of Ag during charging and discharging. Ag that is contained in the positive electrode is oxidized at a potential of 3.84 V or higher. The use of energy for the oxidation reaction of Ag is the consumption of energy for a reaction other than the charge and discharge reaction of the all-solid-state battery, and the energy efficiency is poor. When the oxide 13 having a composition different from that of the Li-containing transition metal oxide is formed in advance between the positive electrode current collector 11 and the positive electrode active material 12, it is possible to suppress the oxidation of Ag. As a result, the cycle characteristics of the all-solid-state battery are considered to improve.

Hitherto, the embodiment of the present invention has been described with reference to the drawings, but each configuration, a combination thereof and the like in each embodiment are simply examples, and the addition, omission, substitution and other modification of the configuration are possible within the scope of the features of the present invention.

### Examples

### "Example 1"

### (Production of positive electrode paste)

First, a Ag powder and a Pd powder were prepared so that the volume ratio between the Ag powder and the Pd powder reached 80:20. Next, a AgCoO₂ powder that was to serve as an oxide having a composition different from that of a Li-containing transition metal oxide was prepared. Subsequently, these powders were charged into a mechanochemical reactor (manufactured by Hosokawa Micron Corporation, product name: circulation-type MECHANO FUSION (registered trademark) system AMS). Then, a AgCoO₂ coated layer was formed on the surfaces of a AgPd powder particles by a mechanochemical reaction. Next, the above-described powder and LiCoO₂ that was a positive electrode active material were mixed in a volume ratio of 50:50 to obtain a mixed powder, and ethyl cellulose and dihydroterpineol were added to and mixed with the mixed powder; and thereby, a positive electrode current collector layer paste was produced. The ethyl cellulose was a binder, and the dihydroterpineol was a solvent.

A positive electrode active material layer paste was produced by adding and mixing ethyl cellulose and dihydroterpineol to and with LiCoO₂. LiCoO₂ was a positive electrode active material.

### (Production of solid electrolyte layer paste)

As starting materials, Li₂CO₃, SiO₂ and Li₃PO₄ were mixed in a mole ratio of 2:1:1. Regarding the mixing, the starting materials were wet-mixed together using water as a dispersion medium and a ball mill for 16 hours. The mixed starting materials were calcined at 950°C for two hours, and Li_{3.5}Si_{0.5}P_{0.5}O₄ was produced. Next, 100 parts by mass of this calcined powder, 100 parts by mass of ethanol and 200 parts by mass of toluene were charged into the ball mill and wet-mixed together. In addition, 16 parts by mass of a polyvinyl butyral-based binder and 4.8 parts by mass of benzyl butyl phthalate were further charged thereinto and mixed together; and thereby, a solid electrolyte layer paste was produced.

### (Production of negative electrode paste)

For a negative electrode paste, a powder obtained by mixing Ag, Pd and Li_{3.5}Si_{0.5}P_{0.5}O₄ in fractions of 40:10:50 in terms of the volume ratio was used. Ethyl cellulose and dihydroterpineol were added to and mixed with this powder. Ag functions as a negative electrode current collector and a negative electrode active material. When Ag functions as a negative electrode active material, the output voltage of an all-solid-state battery becomes close to 3.8 V.

### (Production of all-solid-state battery)

Next, a positive electrode unit and a negative electrode unit were produced by the following procedure. First, the positive electrode active material layer paste was printed on the above-described solid electrolyte layer sheet in a thickness of 5 µm using screen printing. Next, the printed positive electrode active material layer paste was dried at 80°C for five minutes. In addition, the positive electrode current collector layer paste was printed on the dried positive electrode active material layer paste in a thickness of 5 µm using screen printing. Next, the printed positive electrode current collector layer paste was dried at 80°C for five minutes. Next, the positive electrode active material layer paste was printed again on the dried positive electrode current collector layer paste in a thickness of 5 µm using screen printing and dried. After that, the PET film was peeled off. A positive electrode unit including a positive electrode active material layer/a positive electrode current collector layer/a positive electrode active material layer laminated in this order on a main surface of the solid electrolyte layer was obtained as described above.

Next, the negative electrode paste was printed on a main surface of the solid electrolyte layer in a thickness of 10 µm. Next, the printed negative electrode paste was dried at 80°C for five minutes. A negative electrode unit was produced by this procedure.

Next, a solid electrolyte unit was produced by overlapping five solid electrolyte layer sheets. Fifty electrode units (25 positive electrode units and 25 negative electrode units) were alternately laminated with the solid electrolyte unit interposed therebetween; and thereby, a laminated body was produced. At this time, each unit was laminated in a zigzag manner so that odd-numbered electrode units extended only from one end face and even-numbered electrode units extended only from the other end face. Six solid electrolyte layer sheets were laminated on these laminated units. After that, this was subjected to thermocompression bonding and then cut; and thereby, laminated chips were produced. After that, the laminated chips were simultaneously sintered to obtain a laminated body. For the simultaneous sintering, the chips were heated up to a sintering temperature of 800°C at a rate of temperature increase of 200°C/hour in the atmosphere, held at the temperature for two hours and, after the sintering, naturally cooled.

Terminal electrodes 5 and 6 were attached to the sintered laminated body (sintered body) by a well-known method to produce an all-solid-state battery. In addition, a cross section of the produced all-solid-state battery was confirmed with a scanning electron microscope, and the film thickness of the oxide having a composition different from that of the Li-containing transition metal oxide was measured. The film thickness of the oxide having a composition different from that of the Li-containing transition metal oxide of Example 1 was 0.01 µm. In addition, there was no change in the volume ratio of each layer between a paste state before sintering and a state after sintering. Ag may be present as pure Ag or may be contained as an element contained in a AgPd alloy.

In addition, the cycle characteristics of the all-solid-state batteries produced under the same conditions were measured. The cycle characteristics were measured by repeating a charge and discharge test under a temperature condition of 60°C in a state where a first external terminal and a second external terminal were pinched with a spring probe so as to face each other. As the measurement conditions, the currents during charging and during discharge were both set to 100 µA, and the end voltages during charging and during discharge were set to 3.9 V and 0 V, respectively. The capacity at the 10th discharging, at which the discharge capacity was stabilized, was regarded as the initial discharge capacity. In addition, the cycle characteristics were obtained by dividing the discharge capacity at the 500th cycle by the 10th discharge capacity.

### "Examples 2 to 5"

Examples 2 to 5 were different from Example 1 in that the film thickness of the oxide having a composition different from that of the Li-containing transition metal oxide was changed. The film thickness of the oxide having a composition different from that of the Li-containing transition metal oxide was controlled by increasing the amount of AgCoO₂ that was added at the time of performing the mechanochemical reaction.

The film thickness of the oxide having a composition different from that of the Li-containing transition metal oxide of Example 2 was 0.1 µm. The film thickness of the oxide having a composition different from that of the Li-containing transition metal oxide of Example 3 was 0.5 µm. The film thickness of the oxide having a composition different from that of the Li-containing transition metal oxide of Example 4 was 1.0 µm. The film thickness of the oxide having a composition different from that of the Li-containing transition metal oxide of Example 5 was 2.0 µm. The other conditions were set in the same manner as in Example 1, and the cycle characteristics were obtained.

### "Example 6"

Example 6 was different from Example 1 in that the positive electrode active material that was contained in the positive electrode current collector layer paste and the positive electrode active material layer paste was changed from LiCoO₂ to LiMn₂O₄. The other conditions were set in the same manner as in Example 1, and the cycle characteristics were obtained.

### "Example 7"

Example 7 was different from Example 1 in that the positive electrode active material that was contained in the positive electrode current collector layer paste and the positive electrode active material layer paste was changed from LiCoO₂ to LiMn₂O₄ and AgCoO₂, which served as the oxide having a composition different from that of the Li-containing transition metal oxide, was changed to AgMn₂O₄. The other conditions were set in the same manner as in Example 1, and the cycle characteristics were obtained.

### "Example 8"

Example 8 was different from Example 1 in that AgCoO₂, which served as the oxide having a composition different from that of the Li-containing transition metal oxide, was changed to AgMn₂O₄. The other conditions were set in the same manner as in Example 1, and the cycle characteristics were obtained.

### "Example 9" and "Example 10"

Example 9 was different from Example 1 in that the film thickness of the oxide having a composition different from that of the Li-containing transition metal oxide was changed. The film thickness of the oxide having a composition different from that of the Li-containing transition metal oxide was controlled by increasing the amount of AgCoO₂ that was added at the time of performing the mechanochemical reaction.

The film thickness of the oxide having a composition different from that of the Li-containing transition metal oxide of Example 9 was 0.009 µm. The film thickness of the oxide having a composition different from that of the Li-containing transition metal oxide of Example 10 was 2.1 µm.

### "Example 11" to "Example 14"

Example 11 was different from Example 1 in that the contact rate between the positive electrode active material and the positive electrode current collector was changed. The contact rate between the positive electrode active material and the positive electrode current collector was adjusted by changing the time of performing the mechanochemical reaction. Specifically, when the amount of the AgCoO₂ coated layer that was formed by the contact with the surfaces of the AgPd powder particles was decreased by shortening the time of performing the mechanochemical reaction, the contact rate between the positive electrode active material and the positive electrode current collector that was not coated with the AgCoO₂ coated layer increased. On the other hand, when the amount of the AgCoO₂ coated layer that was formed by the contact with the surfaces of the AgPd powder particles was increased by lengthening the time of performing the mechanochemical reaction, the contact rate between the positive electrode active material and the positive electrode current collector that was not coated with the AgCoO₂ coated layer decreased.

The film thickness of the oxide having a composition different from that of the Li-containing transition metal oxide of Example 9 was 0.009 µm. The film thickness of the oxide having a composition different from that of the Li-containing transition metal oxide of Example 10 was 2.1 µm.

### "Example 15" to "Example 18"

Example 15 was different from Example 1 in that the positive electrode current collector was changed from AgPd to Ag. Examples 16 to 18 were different from Example 15 in that the film thickness of the oxide having a composition different from that of the Li-containing transition metal oxide was changed. The film thickness of the oxide having a composition different from that of the Li-containing transition metal oxide was controlled by increasing the amount of AgCoO₂ that was added at the time of performing the mechanochemical reaction.

The film thickness of the oxide having a composition different from that of the Li-containing transition metal oxide of Example 15 was 0.01 µm. The film thickness of the oxide having a composition different from that of the Li-containing transition metal oxide of Example 16 was 0.1 µm. The film thickness of the oxide having a composition different from that of the Li-containing transition metal oxide of Example 17 was 0.5 µm. The film thickness of the oxide having a composition different from that of the Li-containing transition metal oxide of Example 18 was 1.0 µm. The other conditions were set in the same manner as in Example 1, and the cycle characteristics were obtained.

### "Comparative Example 1"

Comparative Example 1 was different from Example 1 in that the oxide having a composition different from that of the Li-containing transition metal oxide was not formed, and the positive electrode active material that was contained in the positive electrode current collector layer paste and the positive electrode active material layer paste was changed from LiCoO₂ to LiMn₂O₄. The other conditions were set in the same manner as in Example 1, and the cycle characteristics were obtained.

### "Comparative Example 2"

Comparative Example 2 was different from Example 1 in that the oxide having a composition different from that of the Li-containing transition metal oxide was not formed. The other conditions were set in the same manner as in Example 1, and the cycle characteristics were obtained.

### "Comparative Example 3"

Comparative Example 3 was different from Example 15 in that the oxide having a composition different from that of the Li-containing transition metal oxide was not formed. The other conditions were set in the same manner as in Example 15, and the cycle characteristics were obtained.

The results of Examples 1 to 18 and Comparative Examples 1 to 3 were summarized in Table 1 below.

**[Table 1]**

| | Positive electrode current collector layer | | | | | Positive electrode active material layer | Contact rate between positive electrode active material and positive electrode current collector | Solid electrolyte layer | Negative electrode | Capacity retention rate after 500 cycles |
|---|---|---|---|---|---|---|---|---|---|---|
| | Positive electrode current collector | Intermediate oxide | | Positive electrode active material | | | | | | |
| | Composition | Composition | Thickness (µm) | Composition | Mass ratio of positive electrode active material (wt%) | Composition | | Composition | Composition and mass ratio | |
| Example 1 | Ag:Pd = 80:20 | AgCoO₂ | 0.01 | LiCoO₂ | 50 | LiCoO₂ | 4.2 | Li_{3.5}Si_{0.5}P_{0.5}O₄ | Ag:Pd:Li_{3.5}Si_{0.5}P_{0.5}O₄ = 40:10:50 | 86 |
| Example 2 | Ag:Pd = 80:20 | AgCoO₂ | 0.1 | LiCoO₂ | 50 | LiCoO₂ | 4 | Li_{3.5}Si_{0.5}P_{0.5}O₄ | Ag:Pd:Li_{3.5}Si_{0.5}P_{0.5}O₄ = 40:10:50 | 89 |
| Example 3 | Ag:Pd = 80:20 | AgCoO₂ | 0.5 | LiCoO₂ | 50 | LiCoO₂ | 4.1 | Li_{3.5}Si_{0.5}P_{0.5}O₄ | Ag:Pd:Li_{3.5}Si_{0.5}P_{0.5}O₄ = 40:10:50 | 90 |
| Example 4 | Ag:Pd = 80:20 | AgCoO₂ | 1.0 | LiCoO₂ | 50 | LiCoO₂ | 4.2 | Li_{3.5}Si_{0.5}P_{0.5}O₄ | Ag:Pd:Li_{3.5}Si_{0.5}P_{0.5}O₄ = 40:10:50 | 89 |
| Example 5 | Ag:Pd = 80:20 | AgCoO₂ | 2.0 | LiCoO₂ | 50 | LiCoO₂ | 4 | Li_{3.5}Si_{0.5}P_{0.5}O₄ | Ag:Pd:Li_{3.5}Si_{0.5}P_{0.5}O₄ = 40:10:50 | 91 |
| Example 8 | Ag:Pd = 80:20 | AgMn₂O₄ | 0.01 | LiCoO₂ | 50 | LiCoO₂ | 4 | Li_{3.5}Si_{0.5}P_{0.5}O₄ | Ag:Pd:Li_{3.5}Si_{0.5}P_{0.5}O₄ = 40:10:50 | 78 |
| Example 9 | Ag:Pd = 80:20 | AgCoO₂ | 0.009 | LiCoO₂ | 50 | LiCoO₂ | 4.3 | Li_{3.5}Si_{0.5}P_{0.5}O₄ | Ag:Pd:Li_{3.5}Si_{0.5}P_{0.5}O₄ = 40:10:50 | 75 |
| Example 10 | Ag:Pd = 80:20 | AgCoO₂ | 2.1 | LiCoO₂ | 50 | LiCoO₂ | 4.2 | Li_{3.5}Si_{0.5}P_{0.5}O₄ | Ag:Pd:Li_{3.5}Si_{0.5}P_{0.5}O₄ = 40:10:50 | 79 |
| Example 11 | Ag:Pd = 80:20 | AgCoO₂ | 0.01 | LiCoO₂ | 50 | LiCoO₂ | 9.7 | Li_{3.5}Si_{0.5}P_{0.5}O₄ | Ag:Pd:Li_{3.5}Si_{0.5}P_{0.5}O₄ = 40:10:50 | 86 |
| Example 12 | Ag:Pd = 80:20 | AgCoO₂ | 0.01 | LiCoO₂ | 50 | LiCoO₂ | 0.8 | Li_{3.5}Si_{0.5}P_{0.5}O₄ | Ag:Pd:Li_{3.5}Si_{0.5}P_{0.5}O₄ = 40:10:50 | 86 |
| Example 13 | Ag:Pd = | AgCoO₂ | 0.01 | LiCoO₂ | 50 | LiCoO₂ | 0.07 | Li_{3.5}Si_{0.5}P_{0.5}O₄ | Ag:Pd:Li_{3.5}Si_{0.5}P_{0.5}O₄ | 71 |

| | | | | | | | | | | |
|---|---|---|---|---|---|---|---|---|---|---|
| | 80:20 | | | | | | | | = 40:10:50 | |
| Example 14 | Ag:Pd = 80:20 | AgCoO₂ | 0.01 | LiCoO₂ | 50 | LiCoO₂ | 10.4 | Li_{3.5}Si_{0.5}P_{0.5}O₄ | Ag:Pd:Li_{3.5}Si_{0.5}P_{0.5}O₄ = 40:10:50 | 70 |
| Example 15 | Ag | AgCoO₂ | 0.01 | LiCoO₂ | 50 | LiCoO₂ | 4.3 | Li_{3.5}Si_{0.5}P_{0.5}O₄ | Ag:Pd:Li_{3.5}Si_{0.5}P_{0.5}O₄ = 40:10:50 | 73 |
| Example 16 | Ag | AgCoO₂ | 0.1 | LiCoO₂ | 50 | LiCoO₂ | 4.4 | Li_{3.5}Si_{0.5}P_{0.5}O₄ | Ag:Pd:Li_{3.5}Si_{0.5}P_{0.5}O₄ = 40:10:50 | 77 |
| Example 17 | Ag | AgCoO₂ | 0.5 | LiCoO₂ | 50 | LiCoO₂ | 4.2 | Li_{3.5}Si_{0.5}P_{0.5}O₄ | Ag:Pd:Li_{3.5}Si_{0.5}P_{0.5}O₄ = 40:10:50 | 71 |
| Example 18 | Ag | AgCoO₂ | 1.0 | LiCoO₂ | 50 | LiCoO₂ | 4.3 | Li_{3.5}Si_{0.5}P_{0.5}O₄ | Ag:Pd:Li_{3.5}Si_{0.5}P_{0.5}O₄ = 40:10:50 | 74 |
| Comparative Example 2 | Ag:Pd = 80:20 | - | - | LiCoO₂ | 50 | LiCoO₂ | - | Li_{3.5}Si_{0.5}P_{0.5}O₄ | Ag:Pd:Li_{3.5}Si_{0.5}P_{0.5}O₄ = 40:10:50 | 50 |
| Comparative Example 3 | Ag | - | - | LiCoO₂ | 50 | LiCoO₂ | - | Li_{3.5}Si_{0.5}P_{0.5}O₄ | Ag:Pd:Li_{3.5}Si_{0.5}P_{0.5}O₄ = 40:10:50 | 43 |
| Example 6 | Ag:Pd = 80:20 | AgCoO₂ | 0.01 | LiMn₂O₄ | 50 | LiMn₂O₄ | 4.4 | Li_{3.5}Si_{0.5}P_{0.5}O₄ | Ag:Pd:Li_{3.5}Si_{0.5}P_{0.5}O₄ = 40:10:50 | 70 |
| Example 7 | Ag:Pd = 80:20 | AgMn₂O₄ | 0.01 | LiMn₂O₄ | 50 | LiMn₂O₄ | 4.3 | Li_{3.5}Si_{0.5}P_{0.5}O₄ | Ag:Pd:Li_{3.5}Si_{0.5}P_{0.5}O₄ = 40:10:50 | 83 |
| Comparative Example 1 | Ag:Pd = 80:20 | - | - | LiMn₂O₄ | 50 | LiMn₂O₄ | - | Li_{3.5}Si_{0.5}P_{0.5}O₄ | Ag:Pd:Li_{3.5}Si_{0.5}P_{0.5}O₄ = 40:10:50 | 40 |

Compared with Comparative Examples 1 to 3, the cycle characteristics were excellent in Examples 1 to 18. This is considered to be because the oxide (oxide) having a composition different from that of the Li-containing transition metal oxide suppressed the oxidation of Ag during charging and discharging.

### Industrial Applicability

It is possible to further improve the cycle characteristics of an all-solid-state battery than those of the conventional all-solid-state battery.

### Reference Signs List

1 Positive electrode
1A, 1C Positive electrode current collector layer (first layer)
1B Positive electrode active material layer (second layer)
1D Interlayer
2, 2C Negative electrode
2A Negative electrode current collector layer
2B Negative electrode active material layer
3 Solid electrolyte layer
4 Laminated body
5, 6 Terminal electrode
10 All-solid-state battery
11 Positive electrode current collector (Ag-containing compound)
21 Negative electrode current collector
12 Positive electrode active material (Li-containing transition metal oxide)
13 Oxide (oxide) having composition different from that of Li-containing transition metal oxide
22 Negative electrode active material
23 Solid electrolyte

## Claims

1. An all-solid-state battery comprising:
a sintered body including a positive electrode, a negative electrode and a solid electrolyte layer between the positive electrode and the negative electrode,
wherein the positive electrode contains a Ag-containing compound, a Li-containing transition metal oxide and an oxide having a composition different from a composition of the Li-containing transition metal oxide,
the oxide contains Ag, and
at least a part of the Ag-containing compound and the Li-containing transition metal oxide is present in the positive electrode with the oxide present therebetween.

2. The all-solid-state battery according to Claim 1,
wherein the oxide contains a transition metal element that configures the Li-containing transition metal oxide.

3. The all-solid-state battery according to Claim 1,
wherein a minimum thickness of the oxide that links at least a part of the Ag-containing compound and the Li-containing transition metal oxide is 0.01 µm or more and 2.0 µm or less.

4. The all-solid-state battery according to Claim 1,
wherein a contact rate between the Li-containing transition metal oxide and the Ag-containing compound in a cross section of the positive electrode is 0.1 % or more and 10% or less.

5. The all-solid-state battery according to Claim 1,
wherein the Ag-containing compound is any one selected from Ag or Ag/Pd.

6. The all-solid-state battery according to Claim 1,
wherein the positive electrode includes a first layer and a second layer on at least one main surface of the first layer, and
the first layer contains the Ag-containing compound, the Li-containing transition metal oxide and the oxide.

7. The all-solid-state battery according to Claim 1,
wherein the second layer contains the Li-containing transition metal oxide.

8. The all-solid-state battery according to Claim 1,
wherein the first layer and the second layer contain a Li-containing transition metal oxide having the same composition.

9. The all-solid-state battery according to Claim 1,
wherein the positive electrode contains lithium cobaltate.
